# FASCICULE DE BREVET EUROPEEN

(11) **EP 3 735 001 B1**
(45) Date de publication et mention de la délivrance du brevet: **25.03.2026**
(21) Numéro de dépôt: 20171651.1
(22) Date de dépôt: 27.04.2020
(51) Int. Cl.: H04W 4/06, H04W 4/08, H04L 9/40, H04L 65/611, H04W 4/20

(54) **RÉSEAU DE COMMUNICATION ET PROCÉDÉ DE GESTION DÉCENTRALISÉE DE COMMUNICATIONS VIA LE RÉSEAU DE COMMUNICATION**
KOMMUNIKATIONSNETZ UND VERFAHREN ZUM DEZENTRALISIERTEN KOMMUNIKATIONSMANAGEMENT ÜBER DAS KOMMUNIKATIONSNETZ
COMMUNICATION NETWORK AND METHOD FOR DECENTRALIZED COMMUNICATION MANAGEMENT VIA THE COMMUNICATION NETWORK

(30) Priorité: 29.04.2019 FR 1904514
(43) Date de publication de la demande: 04.11.2020
(73) Titulaire: Airbus DS SLC, 78990 Elancourt (FR)
(72) Inventeur: PATEROUR, Olivier, 78280 Guyancourt (FR)
(74) Mandataire: Cabinet Camus Lebkiri

(56) Documents cités:
- EP-A1- 2 887 620
- J. ROSENBERG ET AL: "RFC 3261 - SIP: Session Initiation Protocol", 1 June 2002 (2002-06-01), XP055324488, Retrieved from the Internet <URL:https://tools.ietf.org/html/rfc3261> [retrieved on 20161130]
- AIRBUS: "Interconnection chat group call", vol. SA WG6, no. Sophia Antipolis, France; 20180723 - 20180727, 9 September 2018 (2018-09-09), XP051561420, Retrieved from the Internet <URL:http://www.3gpp.org/ftp/Meetings%5F3GPP%5FSYNC/SA/Docs/SP%2D180678%2Ezip> [retrieved on 20180909]

## Description

### DOMAINE TECHNIQUE DE L'INVENTION

Le domaine technique de l'invention est celui des réseaux de communication et plus particulièrement celui des réseaux de communication permettant une gestion décentralisée des communications.

La présente invention concerne un réseau de communication et plus particulièrement un réseau de communication permettant une gestion décentralisée des communications.

### ARRIERE-PLAN TECHNOLOGIQUE DE L'INVENTION

Dans le standard 3GPP régissant les réseaux mobiles 2G ou GSM (pour « Global System for Mobile Communications »), 3G, 4G ou LTE (pour « Long-Term Evolution ») et 5G, et plus particulièrement dans les services MCS (pour « Mission Critical Services ») de communications mobiles au sein d'un réseau tactique, chaque utilisateur a un serveur utilisateur et au moins un serveur de groupes propres appelés respectivement « home user server » et « home groups server », définis par configuration, auprès desquels il peut avoir accès à son profil utilisateur et à ses groupes multimédias lui permettant de mener des communications privées et des communications de groupes.

Dans le standard 3GPP MCS, ces serveurs sont considérés comme atteignables par l'utilisateur, et lorsque cela n'est pas le cas, l'utilisateur peut éventuellement s'enregistrer auprès d'un serveur MCS local isolé si un tel serveur a été déployé. Cependant, seules les communications avec les utilisateurs enregistrés auprès de ce même serveur MCS local sont possibles ; l'accès aux services de communication proposés par le réseau de communication est alors considérablement limité.

Il existe donc un besoin pour un utilisateur de pouvoir accéder à des services de communication proposés par un réseau de communication, quel que soit l'état de la connexion avec ses « home servers ».

Le document EP2887620 intitulé « Session Initiation Protocol Messaging » est connu de l'état de la technique.

### RESUME DE L'INVENTION

L'invention offre une solution aux problèmes évoqués précédemment, en permettant à un utilisateur de pouvoir communiquer avec d'autres utilisateurs d'un réseau de communication indépendamment de l'état de sa connexion avec ses « home servers ».

Un premier aspect de l'invention concerne un réseau de communication permettant à au moins un équipement utilisateur, grâce à des informations de configuration, d'accéder à des services de communication, la communication étant une communication privée ou une communication au sein d'un groupe multimédia auquel l'équipement utilisateur est affilié, le réseau de communication comportant une pluralité de serveurs et étant caractérisé en ce que chaque serveur auquel l'équipement utilisateur est autorisé à accéder comporte les informations de configuration de l'équipement utilisateur.

Grâce à l'invention, comme les informations de configuration nécessaires à l'authentification et à l'enregistrement pour l'accès aux services de communication par l'utilisateur sont stockées dans tous les serveurs du réseau de communication auxquels l'utilisateur est autorisé à accéder, il peut s'authentifier et s'enregistrer auprès de n'importe lequel des serveurs du réseau de communication et continuer à communiquer avec les autres utilisateurs, comme s'il était connecté à ses « home servers ». La gestion des communications n'est donc plus centralisée au niveau des « home servers » mais répartie sur l'ensemble des serveurs du réseau de communication.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon un mode de réalisation, une pluralité de serveurs du réseau de communication partage une session de signalisation multidiffusion.

Ainsi, chaque serveur partageant la session de signalisation peut envoyer un message à l'ensemble des autres serveurs de la session de signalisation.

Selon une variante de réalisation du mode de réalisation précédent, la session de signalisation est configurée dans chaque serveur partageant la session de signalisation.

Selon une variante de réalisation du mode de réalisation précédent compatible avec la variante de réalisation précédente, chaque serveur est configuré pour rejoindre la session de signalisation dès qu'un premier équipement utilisateur s'est enregistré auprès de lui.

Ainsi, un serveur auquel aucun équipement utilisateur n'est connecté ne reçoit pas les messages envoyés via la session de signalisation.

Selon une variante de réalisation du mode de réalisation précédent compatible avec les variantes de réalisation précédentes, chaque serveur est configuré pour rejoindre la session de signalisation et envoyer la liste d'équipements utilisateurs qui sont enregistrés auprès de lui, lorsque ledit serveur se connecte ou se reconnecte au réseau de communication.

Ainsi, le serveur fait connaître aux autres serveurs les équipements utilisateurs qui lui sont connectés pour que les autres serveurs puissent initier des communications privées avec ces équipements utilisateurs.

Selon une variante de réalisation compatible avec la variante de réalisation précédente, chaque autre serveur du réseau de communication est configuré pour répondre en publiant la liste d'équipements utilisateurs qui sont enregistrés auprès de lui.

Ainsi, le serveur qui se connecte ou se reconnecte au réseau de communication connaît tous les utilisateurs du réseau de communication et peut les joindre pour des communications privées.

Selon un mode de réalisation compatible avec le mode de réalisation précédent, chaque groupe multimédia comporte une session de groupe multidiffusion partagée entre les serveurs auprès desquels des équipements utilisateurs affiliés au groupe multimédia sont enregistrés.

Ainsi, les utilisateurs d'un groupe multimédia peuvent communiquer et s'échanger des données ou des vidéos via la session de groupe.

Selon une variante de réalisation du mode de réalisation précédent, chaque serveur est configuré pour rejoindre une session de groupe quand un des équipements utilisateurs enregistrés auprès de lui s'affilie au groupe multimédia correspondant.

Ainsi, le nouvel utilisateur peut communiquer et échanger des données avec les autres utilisateurs du groupe multimédia auquel il vient de s'affilier.

Selon une variante de réalisation du mode de réalisation précédent compatible avec la variante de réalisation précédente, chaque serveur est configuré pour rejoindre la ou les session(s) de groupe auxquels les équipements utilisateurs qui sont enregistrés auprès de lui sont affiliés lorsque ledit serveur se connecte ou se reconnecte au réseau de communication.

Ainsi, les utilisateurs authentifiés auprès du serveur peuvent communiquer et échanger des données avec les autres utilisateurs du groupe multimédia.

Selon un mode de réalisation compatible avec les modes de réalisation précédents, chaque serveur comporte un module de gestion des transmissions.

Ainsi, chaque serveur possède un module capable de gérer la prise de parole pour l'audio et la prise de transmission pour la vidéo dans un groupe multimédia.

Un second aspect de l'invention concerne un procédé de gestion décentralisée de communications via un réseau de communication comportant une pluralité de serveurs, caractérisé en ce qu'il comporte les étapes suivantes :
- Authentification et enregistrement d'un équipement utilisateur auprès d'un premier serveur du réseau de communication ;
- Envoi, par le premier serveur, d'un message signalant l'authentification et l'enregistrement de l'équipement utilisateur, aux autres serveurs du réseau de communication ;
- Communication de l'équipement utilisateur avec au moins un autre équipement utilisateur authentifié et enregistré auprès d'un serveur du réseau de communication, la communication étant une communication privée ou une communication au sein d'un groupe multimédia auquel l'équipement utilisateur est affilié.

Ainsi, une fois que l'équipement utilisateur est connecté auprès d'un serveur, celui-ci en informe tous les autres serveurs pour que ces derniers puissent joindre l'équipement utilisateur dans le cadre d'une communication privée.

Selon un mode de réalisation, si l'équipement utilisateur s'était déjà enregistré auprès d'un autre serveur du réseau de communication, le message comporte un identifiant de l'autre serveur.

Ainsi, les serveurs savent que l'équipement utilisateur n'est plus joignable via l'autre serveur.

Selon un mode de réalisation compatible avec le mode de réalisation précédent, l'étape d'envoi du message est réalisée via la session de signalisation.

Ainsi, le message est envoyé à tous les serveurs du réseau auprès duquel un équipement utilisateur est enregistré et ceux-ci peuvent joindre l'équipement utilisateur dans le cadre d'une communication privée.

Selon un mode de réalisation compatible avec les modes de réalisation précédent, la communication au sein d'un groupe multimédia est réalisée via la session de groupe correspondante.

Ainsi, l'équipement utilisateur peut communiquer et échanger des données avec les autres équipements utilisateurs du groupe multimédia.

Selon un mode de réalisation compatible avec les modes de réalisation précédent, lors de chaque communication de groupe multimédia, la gestion de la transmission est affectée dynamiquement entre les modules de gestion des transmissions des serveurs du réseau de communication partageant la session de groupe.

Ainsi, à un instant donné, le module de gestion des transmissions qui gère la prise de parole audio et la prise de transmission vidéo au sein du groupe multimédia est celui du serveur auquel l'utilisateur qui prend la parole ou transmet une vidéo est affilié et la gestion des transmissions n'est plus alors centralisée au niveau des « home servers ».

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau de communication selon un premier aspect de l'invention.
- La figure 2 montre un schéma synoptique d'un procédé selon un second aspect de l'invention.

### DESCRIPTION DETAILLEE

Sauf précision contraire, un même élément apparaissant sur des figures différentes présente une référence unique.

Un premier aspect de l'invention concerne un réseau de communication permettant une gestion décentralisée des communications.

On entend par « réseau de communication », un réseau permettant d'accéder à des services de communication, c'est-à-dire à des services liés à de la communication, par exemple l'accès à la voix, à la vidéo ou encore à une messagerie avec fichiers pour interagir avec un ou plusieurs équipements utilisateurs. Les services de communication permettent d'établir des communications privées entre deux équipements utilisateurs ou des communications de groupe entre les équipements utilisateurs affiliés à un même groupe multimédia.

On entend par « groupe multimédia » un groupe regroupant plusieurs équipements utilisateurs pouvant interagir entre eux une fois authentifiés et enregistrés auprès d'un serveur du réseau de communication permettant l'accès au groupe multimédia.

On entend par « équipement utilisateur authentifié auprès d'un serveur », un équipement utilisateur dont l'identité a été vérifiée et/ou validée par un serveur lors d'un échange électronique.

On entend par « équipement utilisateur enregistré auprès d'un serveur », un équipement utilisateur connecté à un serveur et donc joignable pour des communications privées via ce serveur. Un équipement utilisateur ne peut pas s'enregistrer auprès d'un serveur s'il ne s'est pas authentifié au préalable auprès de ce même serveur.

On définit une « gestion décentralisée des communications » par opposition à une « gestion centralisée des communications » qui est une gestion réalisée de manière centralisée au niveau des home servers de l'équipement utilisateur qui initie la communication.

Le réseau de communication répond par exemple au standard 3GPP MCS, c'est-à-dire qu'il est compatible avec le standard 3GPP MCS et plus particulièrement avec la version actuelle du 3GPP qui est la version 15, avec les versions précédentes à partir de la version 13 et avec les versions suivantes intégrant toutes les caractéristiques de l'invention.

Le réseau de communication 200 peut être fixe, par exemple un réseau de communication couvrant une entreprise, ou mobile, c'est-à-dire tactique, utilisé, par exemple, dans le cas d'une mission des forces spéciales.

Le réseau de communication selon un premier aspect de l'invention comporte au moins un équipement utilisateur et une pluralité de serveurs.

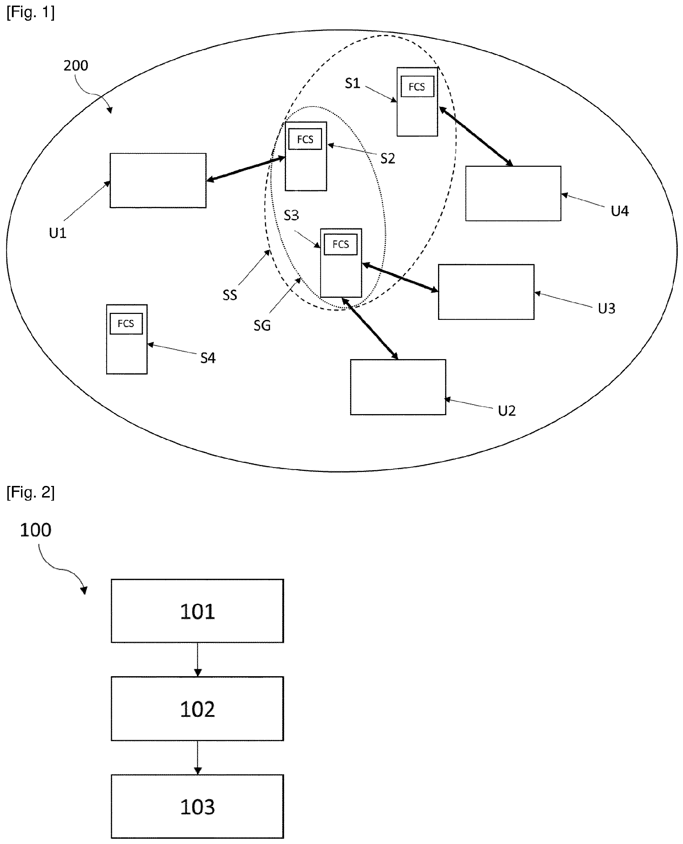

[Fig. 1] La figure 1 montre une représentation schématique du réseau de communication 200 selon un premier aspect de l'invention.

Le réseau de communication 200 comporte quatre équipements utilisateur U1, U2, U3, U4.

Un équipement utilisateur U1, U2, U3, U4 est par exemple un smartphone, une tablette ou encore un ordinateur portable. De manière générale, l'équipement utilisateur U1, U2, U3, U4 dispose d'un écran.

Le réseau de communication 200 comporte également quatre serveurs S1, S2, S3, S4.

Chaque serveur S1, S2, S3, S4 est par exemple compatible avec le standard 3GPP MCS en ce qui concerne l'interface client-serveur.

Un serveur S1, S2, S3, S4 du réseau de communication 200 comporte alors un module de gestion d'identité IDMS, un module de gestion de configuration CMS, un module de gestion de groupes multimédias GMS et un module de gestion de clés de chiffrement KMS.

Le module de gestion d'identité IDMS est configuré pour recevoir et traiter des requêtes d'authentification envoyées par les équipements utilisateurs U1, U2, U3, U4.

Le module de gestion de configuration CMS est configuré pour recevoir une requête de profil utilisateur et envoyer un profil utilisateur à chaque équipement utilisateur U1, U2, U3, U4 dont la requête d'authentification est acceptée par le module de gestion d'identité IDMS du serveur S1, S2, S3, S4.

Le module de gestion de groupes multimédias GMS est configuré pour recevoir une requête de profils de groupe multimédia et envoyer au moins un profil de groupe multimédia à chaque équipement utilisateur U1, U2, U3, U4 dont la requête d'authentification est acceptée par le module de gestion d'identité IDMS du serveur S1, S2, S3, S4.

Le module de gestion de clés de chiffrement KMS est configuré pour recevoir une requête de clés de chiffrement et envoyer au moins une clé de chiffrement à chaque équipement utilisateur U1, U2, U3, U4 dont la requête d'authentification est acceptée par le module de gestion d'identité IDMS du serveur S1, S2, S3, S4. La ou les clé(s) de chiffrement reçue(s) permet(tent) alors à l'équipement utilisateur U1, U2, U3, U4 de générer lui-même ses clés de chiffrement des communications privées.

Un serveur S1, S2, S3, S4 du réseau de communication 200 comporte par exemple un module de gestion des transmissions FCS (pour « Floor Control Server »).

Le module de gestion des transmissions FCS d'un serveur S1, S2, S3, S4 est configuré pour gérer, de manière décentralisée, la prise de parole lors d'une communication audio au sein d'un groupe multimédia dans lequel sont affiliés des équipements utilisateurs U1, U2, U3, U4 enregistrés auprès dudit serveur S1, S2, S3, S4 et la prise de transmission lors d'une communication vidéo. Le module de gestion des transmissions FCS ne gère pas les services de messagerie avec échange de fichiers.

Dans le réseau de communication 200 illustré à la figure 1, l'équipement utilisateur U4 est enregistré auprès du serveur S1, l'équipement utilisateur U1 est enregistré auprès du serveur S2 et les équipements utilisateurs U2, U3 sont enregistrés auprès du serveur S3, ce qui est matérialisé par des flèches bidirectionnelles en trait plein entre l'équipement utilisateur U4 et le serveur S1, entre l'équipement utilisateur U1 et le serveur S2, l'équipement utilisateur U2 et le serveur S3 et l'équipement utilisateur U3 et le serveur S3.

Aucun équipement utilisateur U1, U2, U3, U4 n'est enregistré auprès du serveur S4.

Dans le réseau de communication 200 selon un premier aspect de l'invention, les informations de configuration nécessaires à l'authentification et à l'enregistrement pour l'accès aux services de communication par un équipement utilisateur U1, U2, U3, U4 sont dupliquées dans chaque serveur S1, S2, S3, S4 du réseau de communication 200 auquel ledit équipement utilisateur U1, U2, U3, U4 est autorisé à accéder.

Ainsi, sur la figure 1, dans l'hypothèse où les équipements utilisateurs U1, U2, U3, U4 ont accès à l'ensemble des serveurs S1, S2, S3, S4 du réseau de communication 200, les informations de configuration des équipements utilisateurs U1, U2, U3, U4 sont configurés dans chacun des serveurs S1, S2, S3, S4 du réseau de communication 200.

Chaque équipement utilisateur U1, U2, U3, U4 peut donc s'authentifier et s'enregistrer auprès de n'importe lequel des serveurs S1, S2, S3, S4 du réseau de communication 200. Il n'y a donc plus à proprement parler de « home servers », chaque serveur S1, S2, S3, S4 jouant le rôle de « home servers » si l'équipement utilisateur U1, U2, U3, U4 s'enregistre auprès de lui.

Dans le cas où les serveurs S1, S2, S3, S4 sont des serveurs MCS, les informations de configuration sont par exemple l'identifiant, le profil utilisateur, le ou les profils de groupes multimédias et la ou les clés de chiffrement.

L'identifiant est alors stocké dans le module de gestion d'identités IDMS, le profil utilisateur dans le module de gestion de configuration CMS, le ou les profils de groupes multimédias dans le module de gestion de groupes multimédias GMS et la ou les clés de chiffrement dans le module de gestion de clés de chiffrement KMS de chacun des serveurs S1, S2, S3, S4 auquel l'équipement utilisateur U1, U2, U3, U4 est autorisé à accéder.

Un second aspect de l'invention concerne un procédé de gestion décentralisée de communications via le réseau de communication 200 selon un premier aspect de l'invention.

[Fig. 2] La figure 2 montre un schéma synoptique du procédé 100 selon un premier aspect de l'invention.

La première étape 101 du procédé 100 consiste dans l'authentification et l'enregistrement d'un équipement utilisateur U1, U2, U3, U4 auprès d'un serveur S1, S2, S3, S4 du réseau de communication 200, appelé premier serveur.

Le premier serveur S1, S2, S3, S4 utilise par exemple un protocole standard pour l'authentification, comme par exemple le protocole OpenIDConnect développé dans la norme 3GPP MCS.

Selon ce protocole, la première étape 101 d'authentification comporte une première sous-étape consistant dans l'envoi, par l'équipement utilisateur U1, U2, U3, U4, d'une demande ou requête d'authentification au module de gestion d'identité IDMS du premier serveur S1, S2, S3, S4.

La requête d'authentification est alors traitée par le module de gestion d'identité IDMS du premier serveur S1, S2, S3, S4 lors d'une deuxième sous-étape de traitement.

Cette deuxième sous-étape de traitement comporte elle-même plusieurs sous-étapes :
- une première sous-étape de réception de la requête d'authentification envoyée par l'équipement utilisateur U1, U2, U3, U4 par le module de gestion d'identité IDMS ;
- une deuxième sous-étape d'envoi d'une demande d'au moins une information d'authentification à l'utilisateur de l'équipement utilisateur U1, U2, U3, U4 par le module de gestion d'identité IDMS et de réception de la demande par l'équipement utilisateur U1, U2, U3, U4 ;
- une troisième sous-étape de fourniture de l'information d'authentification demandée par l'utilisateur en utilisant l'équipement utilisateur U1, U2, U3, U4 ;
- une quatrième sous-étape d'envoi de l'information d'authentification fournie par l'utilisateur au module de gestion d'identité IDMS et de réception de l'information d'authentification par le module de gestion d'identité IDMS ;
- une cinquième sous-étape de parcours d'une base de données d'utilisateurs BDD du premier serveur S1, S2, S3, S4 par le module de gestion d'identité IDMS pour déterminer si la base de données d'utilisateurs BDD contient ou non l'information d'authentification.

A l'issue de la cinquième sous-étape de la deuxième sous-étape de traitement, si le module de gestion d'identité IDMS n'a pas trouvé l'information d'authentification, la requête d'authentification est rejetée. Au contraire, si le module de gestion d'identité IDMS a trouvé l'information d'authentification, la requête d'authentification est acceptée.

L'information d'authentification est par exemple un mot de passe et/ou un nom d'utilisateur et/ou une donnée biométrique.

La base de données d'utilisateurs BDD est par exemple une base d'identifiants qui met en relation l'information d'authentification avec un identifiant correspondant.

Dans le cas où la requête d'authentification est acceptée, l'identifiant correspondant à l'information d'authentification de l'utilisateur 302 est envoyé à l'équipement utilisateur U1, U2, U3, U4.

Lors d'une deuxième sous-étape de la première étape 101 du procédé 100, l'identifiant est utilisé pour obtenir un profil utilisateur. En effet, l'équipement utilisateur U1, U2, U3, U4 envoie une requête de profil utilisateur au module de gestion de configuration CMS du premier serveur S1, S2, S3, S4, la requête de profil utilisateur comportant l'identifiant. L'équipement utilisateur U1, U2, U3, U4 reçoit alors en retour le profil utilisateur correspondant à l'identifiant.

Le profil utilisateur peut comporter une liste d'identifiants de groupe multimédia correspondant aux groupes multimédias auxquels son profil utilisateur lui donne accès.

Lors d'une troisième sous-étape de la première étape 101 du procédé 100, l'équipement utilisateur U1, U2, U3, U4 envoie une requête de profils de groupe multimédia au module de gestion de groupes multimédias GMS du premier serveur S1, S2, S3, S4, la requête de profils de groupe multimédia comportant l'identifiant. L'équipement utilisateur U1, U2, U3, U4 reçoit alors en retour le profil de groupe multimédia associé à chaque identifiant de groupe multimédia de la liste d'identifiants de groupe multimédia.

Lors d'une quatrième sous-étape de la première étape 101 du procédé 100, l'équipement utilisateur U1, U2, U3, U4 envoie une requête de clés de chiffrement au module de gestion de clés de chiffrement KMS du premier serveur S1, S2, S3, S4, la requête de clés de chiffrement comportant l'identifiant. L'équipement utilisateur U1, U2, U3, U4 reçoit alors en retour au moins une clé de chiffrement.

Une fois que l'équipement utilisateur U1, U2, U3, U4 a reçu le profil utilisateur, le ou les profils de groupes multimédias, la ou les clés de chiffrement, l'équipement utilisateur U1, U2, U3, U4 possède tous les éléments de configuration lui permettant d'accéder aux services de communication proposés par chaque groupe multimédia dont il a obtenu le profil et aux services de communications privées.

Le premier serveur S1, S2, S3, S4 utilise par exemple un protocole standard pour l'enregistrement, comme par exemple le protocole SIP (« pour Session Initiation Protocol »), consistant dans l'envoi par l'équipement utilisateur U1, U2, U3, U4 d'un message SIP comportant un identifiant récupéré auprès du module de gestion d'identité IDMS lors de l'authentification.

Une deuxième étape 102 du procédé 100 consiste dans l'envoi, par le premier serveur S1, S2, S3, S4, d'un message informant que l'équipement utilisateur U1, U2, U3, U4 s'est authentifié et enregistré auprès de lui, aux autres serveurs S1, S2, S3, S4 du réseau de communication 200.

Le message peut comporter un identifiant d'un autre serveur S1, S2, S3, S4 du réseau de communication 200 si l'équipement utilisateur U1, U2, U3, U4 s'était déjà enregistré auprès de cet autre serveur S1, S2, S3, S4 avant d'essayer de s'enregistrer auprès du premier serveur S1, S2, S3, S4.

Selon un mode de réalisation, le message est envoyé via une session de signalisation multidiffusion partagée entre plusieurs serveurs S1, S2, S3, S4 du réseau de communication 200.

On entend par « session de signalisation », une session usuellement utilisée pour l'échange de messages de service entre les serveurs d'un réseau ou entre ceux-ci et les équipements utilisateurs connectés au réseau, qui sont nécessaires à l'établissement et à la gestion des communications.

On entend par « session multidiffusion », une session dans laquelle des données sont diffusées d'un émetteur vers au moins un récepteur.

La session de signalisation est par exemple définie par configuration dans les serveurs S1, S2, S3, S4 du réseau de communication 200.

Par exemple, sur la figure 1, les serveurs S1, S2 et S3 partagent une session de signalisation SS.

Ainsi, les informations de l'équipement utilisateur U1 ont été envoyées aux serveurs S1 et S3 après son enregistrement via la session de signalisation SS.

Par exemple, un serveur S1, S2, S3, S4 du réseau de communication 200 rejoint la session de signalisation SS si un premier équipement utilisateur U1, U2, U3, U4 s'enregistre auprès de lui.

Ainsi, sur la figure 1, aucun équipement utilisateur U1, U2, U3, U4 ne s'est jamais enregistré auprès du serveur S4 qui n'appartient pas à la session de signalisation SS.

Par exemple, quand un nouveau serveur rejoint le réseau de communication 200 ou qu'un serveur S1, S2, S3, S4 du réseau de communication 200 perd la connexion au réseau de communication 200 puis se reconnecte au réseau de communication 200, le serveur rejoint la session de signalisation et envoie en multidiffusion une liste comportant les équipements utilisateurs U1, U2, U3, U4 qui sont enregistrés auprès de lui. Les autres serveurs S1, S2, S3, S4 du réseau de communication 200 répondent en envoyant également la liste des équipements utilisateurs U1, U2, U3, U4 qui sont enregistrés auprès de chacun d'eux.

Ainsi, chaque serveur S1, S2, S3, S4 du réseau de communication 200 est informé de la présence de chaque équipement utilisateur U1, U2, U3, U4 enregistré et peut initier une communication avec chaque équipement utilisateur U1, U2, U3, U4 enregistré.

Une troisième étape 103 du procédé 100 consiste, pour l'équipement utilisateur U1, U2, U3, U4 à communiquer avec un autre équipement utilisateur U1, U2, U3, U4 enregistré auprès d'un serveur S1, S2, S3, S4 du réseau de communication 200 lors d'une communication privée ou à communiquer avec une pluralité d'équipements utilisateurs U1, U2, U3, U4 enregistrés chacun auprès d'un serveur S1, S2, S3, S4 du réseau de communication 200 lors d'une communication au sein d'un groupe multimédia auquel l'équipement utilisateur U1, U2, U3, U4 est affilié.

Chaque groupe multimédia auprès duquel un équipement utilisateur U1, U2, U3, U4 est affilié propose des services de communication de groupe, permettant à l'équipement utilisateur U1, U2, U3, U4 de communiquer avec les autres équipements utilisateurs U1, U2, U3, U4 affiliés au groupe multimédia.

Pour cela, chaque groupe multimédia comporte une session de groupe SG multidiffusion partagée entre les serveurs S1, S2, S3, S4 du réseau de communication 200 auprès desquels des équipements utilisateurs U1, U2, U3, U4 affiliés au groupe multimédia sont enregistrés.

Sur la figure 1, les serveurs S2 et S3 partagent une session de groupe SG multidiffusion, qui permet par exemple aux équipements utilisateurs U1, U2 et U3 de communiquer au sein du groupe multimédia.

Par exemple, dans le cas où un équipement utilisateur U1, U2, U3 souhaite envoyer un fichier aux autres équipements U1, U2, U3 du groupe multimédia, le fichier étant stocké dans le serveur S2, S3 auprès duquel l'équipement utilisateur U1, U2, U3 envoyant le fichier est enregistré, la session de groupe SG est utilisée pour stocker le lien vers ce fichier dans chaque serveur S2, S3 pour que chaque équipement utilisateur U1, U2, U3 affilié au groupe multimédia puisse avoir accès au fichier même si le serveur S2, S3 auquel l'équipement utilisateur U1, U2, U3 est connecté perd sa connexion avec le réseau de communication 200.

Par exemple, quand un équipement utilisateur U1, U2, U3, U4 s'affilie à un groupe multimédia, le serveur S1, S2, S3, S4 auprès duquel il est affilié rejoint la session de groupe SG correspondant audit groupe multimédia.

Par exemple, quand un nouveau serveur rejoint le réseau de communication 200 ou qu'un serveur S1, S2, S3, S4 du réseau de communication 200 perd la connexion au réseau de communication 200 puis se reconnecte au réseau de communication 200, le serveur rejoint la ou les session(s) de groupe correspondant à un ou plusieurs groupes multimédias auxquels les équipements utilisateurs U1, U2, U3, U4 enregistrés auprès dudit serveur S1, S2, S3, S4 sont affiliés.

Les communications audios au sein d'un groupe multimédia sont par exemple de type « Push-To-Talk » ou PTT et lors de chaque communication de groupe multimédia, la prise de parole est gérée par le module de gestion des transmissions FCS d'un serveur S2, S3 du réseau de communication 200 partageant la session de groupe SG du groupe multimédia. De même, lors de chaque communication vidéo de groupe multimédia, la prise de transmission est gérée par le module de gestion des transmissions FCS.

La gestion de la prise de parole ou de la prise de transmission au sein du groupe multimédia est affectée dynamiquement entre les modules de gestion des transmissions FCS des serveurs S2, S3 du réseau de communication 200 partageant la session de groupe SG du groupe multimédia. Ainsi, le module de gestion des transmissions FCS gérant la prise de parole ou la prise de transmission d'une communication au sein d'un groupe multimédia n'est en général pas le même à chaque instant de la communication.

Par exemple, si l'équipement utilisateur U1 initie une communication audio, c'est le module de de gestion des transmissions FCS du serveur S2 auprès duquel l'équipement utilisateur U1 est enregistré qui gère initialement la prise de parole. Si l'équipement utilisateur U2 souhaite ensuite prendre la parole et que l'équipement utilisateur U1 est en cours de communication, le serveur S3 auprès duquel l'équipement utilisateur U2 est enregistré demande au serveur S2 à prendre la parole. Si une priorité supérieure à celle de l'équipement utilisateur U1 est affectée à l'équipement utilisateur U2, le serveur S2 donne la parole à l'équipement utilisateur U2 et le module de de gestion des transmissions FCS du serveur S3 devient en charge de la gestion de la prise de parole. Sinon, l'équipement utilisateur U1 conserve la prise de parole.

Si l'équipement utilisateur U1 n'est pas en cours de communication, la session de groupe SG diffuse un message informant que la prise de parole est libre. L'équipement utilisateur U2 peut alors prendre la parole et le module de prise de parole FCS du serveur S3 devient en charge de la gestion de la prise de parole.

Si plusieurs équipements utilisateurs U2, U3 demandent la parole en même temps, le serveur S2 dont le module de gestion des transmissions FCS est en charge de la gestion de la transmission accorde la parole à l'équipement utilisateur U2, U3 auquel est affecté la priorité la plus élevée. Si les équipements utilisateurs U2, U3 ont la même priorité, le serveur S2 accorde la parole à l'équipement utilisateur U2, U3 dont il a reçu la demande en premier.

## Revendications

1. Réseau de communication (200) au standard 3rd Generation Partnership Project Mission Critical Service versions 13 à 15, également appelé 3GPP MCS versions 13 à 15, permettant à au moins un équipement utilisateur (U1, U2, U3, U4), grâce à des informations de configuration, d'accéder à des services de communication, la communication étant une communication privée ou une communication au sein d'un groupe multimédia auquel l'équipement utilisateur (U1, U2, U3, U4) est affilié, le réseau de communication (200) comportant une pluralité de serveurs (S1, S2, S3, S4) et chaque serveur (S1, S2, S3, S4) de la pluralité de serveurs (S1, S2, S3, S4), auquel l'équipement utilisateur (U1, U2, U3, U4) est autorisé à accéder comporte les informations de configuration de l'équipement utilisateur (U1, U2, U3, U4), et dans lequel au moins deux serveurs (S1, S2, S3, S4) de la pluralité de serveurs (S1, S2, S3, S4) partagent une session de signalisation (SS) multidiffusion, chaque serveur (S1, S2, S3, S4) étant configuré pour rejoindre la session de signalisation (SS) et envoyer la liste d'équipements utilisateurs (U1, U2, U3, U4) qui sont enregistrés auprès de lui lorsque ledit serveur (S1, S2, S3, S4) se connecte ou se reconnecte au réseau de communication (200), le réseau étant **caractérisé en ce que** chaque groupe multimédia comporte une session de groupe (SG) multidiffusion partagée entre les serveurs (S1, S2, S3, S4) auprès desquels des équipements utilisateurs (U1, U2, U3, U4) affiliés au groupe multimédia sont enregistrés.

2. Réseau de communication (200) selon la revendication précédente, **caractérisé en ce que** la session de signalisation est configurée dans chaque serveur (S1, S2, S3, S4) partageant la session de signalisation (SS).

3. Réseau de communication (200) selon la revendication 2, **caractérisé en ce que** chaque serveur (S1, S2, S3, S4) est configuré pour rejoindre la session de signalisation (SS) dès qu'un premier équipement utilisateur (U1, U2, U3, U4) s'est enregistré auprès de lui.

4. Réseau de communication (200) selon l'une quelconque des revendication 2 ou 3, **caractérisé en ce que**, chaque autre serveur (S1, S2, S3, S4) du réseau de communication (200) est configuré pour répondre en publiant la liste d'équipements utilisateurs (U1, U2, U3, U4) qui sont enregistrés auprès de lui.

5. Réseau de communication (200) selon l'une quelconque des revendications précédentes, **caractérisé en ce que** chaque serveur (S1, S2, S3, S4) est configuré pour rejoindre une session de groupe (SG) quand un des équipements utilisateurs (U1, U2, U3, U4) enregistrés auprès de lui s'affilie au groupe multimédia correspondant.

6. Réseau de communication (200) selon l'une quelconque des revendications précédentes, **caractérisé en ce que** chaque serveur (S1, S2, S3, S4) est configuré pour rejoindre la ou les session(s) de groupe auxquels les équipements utilisateurs (U1, U2, U3, U4) qui sont enregistrés auprès de lui sont affiliés, lorsque ledit serveur (S1, S2, S3, S4) se connecte ou se reconnecte au réseau de communication (200).

7. Réseau de communication (200) selon l'une quelconque des revendications précédentes, **caractérisé en ce que** chaque serveur (S1, S2, S3, S4) comporte un module de gestion de transmissions (FCS).

8. Procédé (100) de gestion décentralisée de communications via le réseau de communication (200) au standard 3rd Generation Partnership Project Mission Critical Service, également appelé 3GPP MCS, selon l'une quelconque des revendications précédentes, **caractérisé en ce qu'**il comporte les étapes suivantes :
- Authentification et enregistrement d'un équipement utilisateur (U1, U2, U3, U4) auprès d'un premier serveur (S1, S2, S3, S4) parmi la pluralité de serveurs (S1, S2, S3, S4) du réseau de communication (200, 101) ;
- Envoi, par le premier serveur (S1, S2, S3, S4), d'un message signalant l'authentification et enregistrement de l'équipement utilisateur (U1, U2, U3, U4), aux autres serveurs (S1, S2, S3, S4) de la pluralité de serveurs (S1, S2, S3, S4, 102) ;
- Communication de l'équipement utilisateur (U1, U2, U3, U4) avec au moins un autre équipement utilisateur (U1, U2, U3, U4) authentifié et enregistré auprès d'un serveur (S1, S2, S3, S4) de la pluralité de serveurs (S1, S2, S3, S4), la communication étant une communication privée ou une communication au sein d'un groupe multimédia auquel l'équipement utilisateur (U1, U2, U3, U4) est affilié (103).

9. Procédé (100) selon la revendication 8, **caractérisé en ce que** si l'équipement utilisateur (U1, U2, U3, U4) s'était déjà enregistré auprès d'un autre serveur (S1, S2, S3, S4) de la pluralité de serveurs (S1, S2, S3, S4), le message comporte un identifiant de l'autre serveur (S1, S2, S3, S4).

10. Procédé (100) selon l'une quelconque des revendications 8 à 9 via le réseau de communication (200) dont au moins deux serveurs (S1, S2, S3, S4) partagent une session de signalisation (SS) multidiffusion, **caractérisé en ce que** l'étape (102) d'envoi du message est réalisée via la session de signalisation (SS).

11. Procédé (100) selon l'une quelconque des revendications 8 à 10 via le réseau de communication (200), **caractérisé en ce que** la communication au sein d'un groupe multimédia est réalisée via la session de groupe (SG) correspondante.

12. Procédé (100) selon l'une quelconque des revendications 8 à 11 via le réseau de communication (200) dont chaque serveur (S1, S2, S3, S4) comporte un module de gestion de transmissions (FCS), **caractérisé en ce que**, lors de chaque communication de groupe multimédia, la gestion de la transmission est affectée dynamiquement entre les modules de gestion de transmissions (FCS) des serveurs (S1, S2, S3, S4) de la pluralité de serveurs (S1, S2, S3, S4) partageant la session de groupe (SG).

## Patentansprüche

1. Kommunikationsnetzwerk (200) gemäß dem Standard 3rd Generation Partnership Project Mission Critical Service Versionen 13 bis 15, auch 3GPP MCS Versionen 13 bis 15 genannt, das mindestens einem Benutzergerät (U1, U2, U3, U4) mithilfe von Konfigurationsinformationen ermöglicht, auf Kommunikationsdienste zugreifen zu können, wobei die Kommunikation eine private Kommunikation oder eine Kommunikation innerhalb einer Multimediagruppe ist, der das Benutzergerät (U1, U2, U3, U4) angehört, wobei das Kommunikationsnetzwerk (200) eine Vielzahl von Servern (S1, S2, S3, S4) umfasst und jeder Server (S1, S2, S3, S4) der Vielzahl von Servern (S1, S2, S3, S4), auf den das Benutzergerät (U1, U2, U3, U4) Zugriff hat, die Konfigurationsinformationen der Benutzergeräte (U1, U2, U3, U4) enthält, und in dem mindestens zwei Server (S1, S2, S3, S4) der Vielzahl von Servern (S1, S2, S3, S4) eine Multicast-Signalisierungssitzung (SS) gemeinsam nutzen, wobei jeder Server (S1, S2, S3, S4) so konfiguriert ist, dass er sich der Signalisierungssitzung (SS) anschließt und die Liste der Benutzergeräte (U1, U2, U3, U4) sendet, die bei ihm registriert sind, wenn der Server (S1, S2, S3, S4) eine Verbindung zum Kommunikationsnetzwerk (200) herstellt oder wiederherstellt, wobei das Netzwerk **dadurch gekennzeichnet ist, dass** jede Multimediagruppe eine Multicast-Gruppensitzung (SG) umfasst, die zwischen den Servern (S1, S2, S3, S4) geteilt wird, bei denen die der Multimediagruppe zugehörigen Benutzergeräte (U1, U2, U3, U4) registriert sind.

2. Kommunikationsnetzwerk (200) gemäß dem vorherigen Anspruch, **dadurch gekennzeichnet, dass** die Signalisierungssitzung in jedem Server (S1, S2, S3, S4) konfiguriert ist, der die Signalisierungssitzung (SS) gemeinsam nutzt.

3. Kommunikationsnetzwerk (200) gemäß Anspruch 2, **dadurch gekennzeichnet, dass** jeder Server (S1, S2, S3, S4) so konfiguriert ist, dass er sich der Signalisierungssitzung (SS) anschließt, sobald sich ein erstes Benutzergerät (U1, U2, U3, U4) bei ihm registriert hat.

4. Kommunikationsnetzwerk (200) gemäß einem der Ansprüche 2 oder 3, **dadurch gekennzeichnet, dass** jeder andere Server (S1, S2, S3, S4) des Kommunikationsnetzwerks (200) so konfiguriert ist, dass er antwortet, indem er die Liste der Benutzergeräte (U1, U2, U3, U4) veröffentlicht, die bei ihm registriert sind.

5. Kommunikationsnetzwerk (200) gemäß einem der vorstehenden Ansprüche, **dadurch gekennzeichnet, dass** jeder Server (S1, S2, S3, S4) so konfiguriert ist, dass er sich einer Gruppensitzung (SG) anschließt, wenn sich eines der bei ihm registrierten Benutzergeräte (U1, U2, U3, U4) der entsprechenden Multimediagruppe anschließt.

6. Kommunikationsnetzwerk (200) gemäß einem der vorstehenden Ansprüche, **dadurch gekennzeichnet, dass** jeder Server (S1, S2, S3, S4) so konfiguriert ist, dass er sich der oder den Gruppensitzungen anschließt, denen die bei ihm registrierten Benutzergeräte (U1, U2, U3, U4) angehören, wenn sich der Server (S1, S2, S3, S4) mit dem Kommunikationsnetzwerk (200) verbindet oder wieder verbindet.

7. Kommunikationsnetzwerk (200) gemäß einem der vorstehenden Ansprüche, **dadurch gekennzeichnet, dass** jeder Server (S1, S2, S3, S4) ein Übermittlungsmanagementmodul (FCS) umfasst.

8. Verfahren (100) zur dezentralen Verwaltung von Kommunikationen über das Kommunikationsnetzwerk (200) gemäß dem Standard 3rd Generation Partnership Project Mission Critical Service, auch 3GPP MCS genannt, gemäß einem der vorstehenden Ansprüche, **dadurch gekennzeichnet, dass** es die folgenden Schritte umfasst:
- Authentifizierung und Registrierung eines Benutzergeräts (U1, U2, U3, U4) bei einem ersten Server (S1, S2, S3, S4) aus der Vielzahl von Servern (S1, S2, S3, S4) des Kommunikationsnetzes (200, 101);
- Senden einer Nachricht durch den ersten Server (S1, S2, S3, S4) an die anderen Server (S1, S2, S3, S4) der Vielzahl von Servern (S1, S2, S3, S4, 102), die die Authentifizierung und Registrierung des Benutzergeräts (U1, U2, U3, U4) signalisiert;
- Kommunikation des Benutzergeräts (U1 U2, U3, U4) mit mindestens einem anderen Benutzergerät (U1, U2, U3, U4), das bei einem Server (S1, S2, S3, S4) der Vielzahl von Servern (S1, S2, S3, S4) authentifiziert und registriert ist, wobei die Kommunikation eine private Kommunikation oder eine Kommunikation innerhalb einer Multimediagruppe ist, der das Benutzergerät (U1, U2, U3, U4) angehört (103).

9. Verfahren (100) gemäß Anspruch 8, **dadurch gekennzeichnet, dass**, wenn das Benutzergerät (U1, U2, U3, U4) bereits bei einem anderen Server (S1, S2, S3, S4) der Vielzahl von Servern (S1, S2, S3, S4) registriert war, die Nachricht eine Kennung des anderen Servers (S1, S2, S3, S4) enthält.

10. Verfahren (100) gemäß einem der Ansprüche 8 bis 9 über das Kommunikationsnetzwerk (200), in dem mindestens zwei Server (S1, S2, S3, S4) eine Multicast-Signalisierungssitzung (SS) gemeinsam nutzen, **dadurch gekennzeichnet, dass** der Schritt (102) des Sendens der Nachricht über die Signalisierungssitzung (SS) durchgeführt wird.

11. Verfahren (100) gemäß einem der Ansprüche 8 bis 10 über das Kommunikationsnetzwerk (200), **dadurch gekennzeichnet, dass** die Kommunikation innerhalb einer Multimediagruppe über die entsprechende Gruppensitzung (SG) durchgeführt wird.

12. Verfahren (100) gemäß einem der Ansprüche 8 bis 11 über das Kommunikationsnetzwerk (200), wobei jeder Server (S1, S2, S3, S4) ein Übertragungsmanagementmodul (FCS) umfasst, **dadurch gekennzeichnet, dass** bei jeder Multimedia-Gruppenkommunikation das Übertragungsmanagement dynamisch zwischen den Übertragungsmanagementmodulen (FCS) der Server (S1, S2, S3, S4) der Vielzahl von Servern (S1, S2, S3, S4), die die Gruppensitzung (SG) gemeinsam nutzen, zugeteilt wird.

## Claims

1. Communication network (200) compliant with the 3rd Generation Partnership Project Mission Critical Service standard versions 13 to 15, also called 3GPP MCS versions 13 to 15, allowing at least one user device (U1, U2, U3, U4), thanks to configuration information, to access communication services, the communication being a private communication or a communication within a multimedia group with which the user device (U1, U2, U3, U4) is affiliated, the communication network (200) comprising a plurality of servers (S1, S2, S3, S4) and each server (S1, S2, S3, S4) of the plurality of servers (S1, S2, S3, S4) to which the user device (U1, U2, U3, U4) is authorized to access comprises the configuration information of the user device (U1, U2, U3, U4), and wherein at least two servers (S1, S2, S3, S4) of the plurality of servers (SI, S2, S3, S4) share a multicast signalling session (SS), each server (S1, S2, S3, S4) being configured to join the signalling session (SS) and send the list of user devices (U1, U2, U3, U4) that are registered with it when said server (S1, S2, S3, S4) connects or reconnects to the communication network (200), the network being **characterized in that** each multimedia group comprises a multicast group session (SG) shared between the servers (S1, S2, S3, S4) with which user devices (U1, U2, U3, U4) affiliated with the multimedia group is registered.

2. Communication network (200) according to the preceding claim, **characterised in that** the signalling session is configured in each server (S1, S2, S3, S4) that shares the signalling session (SS).

3. Communication network (200) according to claim 2, **characterised in that** each server (S1, S2, S3, S4) is configured to join the signalling session (SS) as soon as a first user device (U1, U2, U3, U4) has registered with it.

4. Communication network (200) according to any of the preceding claims, **characterised in that**, each other server (S1, S2, S3, S4) of the communication network (200) is configured to respond by publishing the list of user devices (U1, U2, U3, U4) that are registered with it.

5. Communication network (200) according to any of the preceding claims, **characterised in that** each server (S1, S2, S3, S4) is configured to join a group session (SG) when one of the user devices (U1, U2, U3, U4) registered with it is affiliated with the corresponding multimedia group.

6. Communication network (200) according to any of the preceding claims, **characterised in that** each server (S1, S2, S3, S4) is configured to join the group session or sessions with which the user devices (U1, U2, U3, U4) that are registered with it are affiliated, when said server (S1, S2, S3, S4) connects or reconnects to the communication network (200).

7. Communication network (200) according to any of the preceding claims, **characterised in that** each server (S1, S2, S3, S4) comprises a transmission management module (FCS).

8. Method (100) of decentralised management of communications via the communication network (200) compliant with the 3rd Generation Partnership Project Mission Critical Service standard, according to any of the preceding claims, **characterised in that** it comprises the following steps:
- Authenticating and registering a user device (U1, U2, U3, U4) with a first server (S1, S2, S3, S4) among the plurality of servers (S1, S2, S3, S4) of the communication network (200, 101);
- Sending, by the first server (S1, S2, S3, S4), of a message signalling the authentication and the registration of the user device (U1, U2, U3, U4), to the other servers (S1, S2, S3, S4) of the communication network (200, 102);
- Communicating of the user device (U1, U2, U3, U4) with at least one other user device (U1, U2, U3, U4) authenticated and registered with a server (S1, S2, S3, S4) of the plurality of servers (S1, S2, S3, S4) of the communication network (200), the communication being a private communication or a communication within a multimedia group with which the user device (U1, U2, U3, U4) is affiliated (103).

9. Method (100) according to claim 8, **characterised in that** if the user device (U1, U2, U3, U4) had already registered with another server (S1, S2, S3, S4) of the plurality of servers (S1, S2, S3, S4), the message comprises an identifier of the other server (S1, S2, S3, S4).

10. Method (100) according to any of claims 8 to 9 via the communication network (200) of which at least two servers (S1, S2, S3, S4) share a multicast signalling session (SS), **characterised in that** the step (102) of sending the message is carried out via the signalling session (SS).

11. Method (100) according to any of claims 8 to 10 via the communication network (200), **characterised in that** the communication within a multimedia group is carried out via the corresponding group session (SG).

12. Method (100) according to any of claims 8 to 11 via the communication network (200) of which each server (S1, S2, S3, S4) comprises a transmission management module (FCS), **characterised in that**, during each multimedia group communication, the management of the transmission is assigned dynamically between the transmission management modules (FCS) of the servers (S1, S2, S3, S4) of the plurality of servers (S1, S2, S3, S4) that are sharing the group session (SG).
